# FASCICULE DE BREVET EUROPEEN

(11) **EP 1 903 643 B1**
(45) Date de publication et mention de la délivrance du brevet: **19.03.2014**
(21) Numéro de dépôt: 07291106.8
(22) Date de dépôt: 17.09.2007
(51) Int. Cl.: G02B 6/38, H01R 13/631

(54) **Connecteur électrique ou optique ou hydraulique à auto-alignement de la fiche relativement à l'embase, notamment pour les connexions offshore**
Elektrischer oder optischer oder hydraulischer Steckverbinder mit automatischer Ausrichtung des Steckers bezüglich der Buchse, insbesondere für Verbindungen auf Bohrplattformen
Electric or optical or hydraulic connector with automatic alignment of the pin in relation to the base, in particular for offshore connections

(30) Priorité: 20.09.2006 FR 0608222
(43) Date de publication de la demande: 26.03.2008
(73) Titulaire: Carrier Kheops Bac, 72700 Allonnes (FR)
(72) Inventeur: Cadoret, Yves, 72000 Le Mans (FR); Benoist, Mathieu, 35690 Acigne (FR)
(74) Mandataire: Radault, Gabrielle

(56) Documents cités:
- EP-A1- 0 311 171
- FR-A1- 2 607 635
- US-A- 4 076 361
- US-A1- 2006 199 433

## Description

La présente invention concerne un connecteur électrique ou optique ou hydraulique à auto-alignement de la fiche relativement à l'embase, notamment pour les connexions dites "offshore" et en particulier un connecteur dont la fiche mâle et l'embase réceptacle sont fixées chacune sur des parties support respectives, lesquelles sont destinées à se positionner en alignement l'une à l'autre pour la mise en connexion du connecteur. Néanmoins, l'alignement de ces parties l'une à l'autre, en raison de leurs grandes dimensions et de l'environnement complexe et réduit de celles-ci, dans le domaine offshore n'est pas parfait et il ne peut garantir l'alignement de la fiche et de l'embase du connecteur à la connexion de celles-ci, en sorte qu'il est nécessaire de prévoir un dispositif d'auto-alignement de la fiche et de l'embase en vue de leur connexion.

Le document EP 0 311 171 décrit un connecteur électrique à auto-alignement selon le préambule de la revendication 1.

Les parties support de la fiche et de l'embase du connecteur peuvent tourner l'une par rapport à l'autre de sorte qu'il est nécessaire d'obtenir au moins un rattrapage angulaire et donc radial de la fiche relativement à l'embase.

L'invention a pour objet de répondre à ces besoins et propose un connecteur électrique ou optique ou hydraulique pourvu respectivement d'une fiche électrique, optique ou hydraulique destinée à être connectée à une embase électrique, optique ou hydraulique, du type à auto-alignement de la fiche relativement à l'embase, notamment pour les connexions "offshore", la fiche et l'embase étant solidaires de parties support respectives destinées à se positionner l'une relativement à l'autre en vue d'un alignement approximatif de la fiche et de l'embase à la mise en connexion de ces dernières, comportant un dispositif mécanique d'entraînement permettant à la fiche ou à l'embase d'effectuer un mouvement d'avance et de recul, en vue de sa connexion dans l'embase ou la fiche, respectivement, et un dispositif d'auto-alignement de la fiche ou de l'embase relativement à l'embase ou à la fiche, respectivement, permettant de rattraper les décalages angulaire, radial et de position de l'alignement de la fiche relativement à l'embase à la connexion de celles-ci, caractérisé en ce que ledit dispositif d'auto-alignement comporte au moins deux biellettes montées en trapèze de chaque côté de la fiche ou de l'embase, articulées d'une part à la fiche ou à l'embase, selon une première base du trapèze et d'autre part à une pièce support de la fiche ou de l'embase, respectivement, selon une deuxième base du trapèze.

Ledit dispositif mécanique d'entraînement est de préférence séparé du dispositif d'auto-alignement. Il peut être classique, comprenant au moins un actionneur linéaire de la fiche ou de l'embase relativement à l'embase ou à la fiche, respectivement. Néanmoins, ces dispositifs peuvent être combinés pour fonctionner conjointement.

Lesdites au moins deux biellettes peuvent être montées dans un plan médian ,voire axial du connecteur.

Naturellement, il doit être prévu un volume de débattement de la fiche ou de l'embase pour son positionnement en auto-alignement relativement à l'embase ou à la fiche, respectivement, ce volume pouvant être protégé par une partie carter isolante, laquelle peut en outre coulisser dans un logement complémentaire de la partie support correspondante et agir en tant qu'actionneur linéaire de la fiche ou de l'embase dudit dispositif mécanique d'entraînement.

Il résulte de cette disposition que la fiche ou l'embase est montée sur un trapèze articulé, lequel se déforme en approche et au contact de la partie complémentaire, embase ou fiche pour orienter en alignement l'axe de la fiche et celui de l'embase, à la suite de quoi la connexion de la fiche dans l'embase peut être effectuée au moyen dudit dispositif mécanique d'entraînement.

Naturellement, la partie réceptacle de l'embase (ou de la fiche) présente une ouverture de dimensions légèrement supérieures à l'extrémité externe de la fiche (ou de l'embase), respectivement et/ou est formée de façon évasée vers l'extérieur, en sorte que la capture de la fiche ou de l'embase par la partie réceptacle complémentaire et son introduction de connexion soient facilitées.

Naturellement, la longueur des biellettes et le positionnement de la fiche ou de l'embase sur la première base du trapèze sont calculés pour permettre à l'approche de la fiche de l'embase ou à l'approche de la partie réceptacle par la partie mâle une orientation coaxiale de celles-ci.

Le trapèze peut être isocèle et la fiche ou l'embase peut être montée dans la partie médiane de la petite base.

Le trapèze peut être disposé en outre dans un plan médian du connecteur, voire un plan diamétral dans le cas d'une configuration cylindrique du connecteur. Il peut encore être monté dans un plan parallèle au plan médian, étant décalé de celui-ci.

De plus, en vue de faciliter le rattrapage des jeux, et en particulier le jeu de positionnement de la fiche relativement à l'embase, la liaison d'articulation des biellettes peut être réalisée avec un jeu réalisant un allongement possible de celles-ci, par exemple au moyen du positionnement d'au moins un axe de biellette dans un trou oblong de l'articulation permettant ainsi à l'axe de se déplacer.

Ladite liaison d'articulation peut être de type pivot avec jeu, pivot glissant ou à rotule à débattement angulaire latéral partiel, de manière à rattraper de plus le désalignement de position en altitude de la fiche et de l'embase.

Les biellettes peuvent également être télescopiques, comportant des actionneurs linéaires pour leur allongement ou raccourcissement.

Eventuellement, la fiche et l'embase peuvent comporter chacune un dispositif d'auto-alignement, en sorte que la fiche et l'embase s'auto-alignent conjointement à la connexion.

L'invention est illustrée ci-après à l'aide d'un exemple de réalisation et en référence aux dessins annexés, sur lesquels :
- La figure 1 est un vue en coupe schématique de dessus d'un connecteur selon l'invention et des pièces supports du connecteur,
- La figure 2 est une vue en coupe partielle de la fiche du connecteur et de sa pièce support,
- La figure 3 est une vue en coupe d'un biellette du dispositif d'auto-alignement du connecteur et
- Les figures 4 à 7 sont des vues schématiques de la cinématique d'auto-alignement du connecteur.

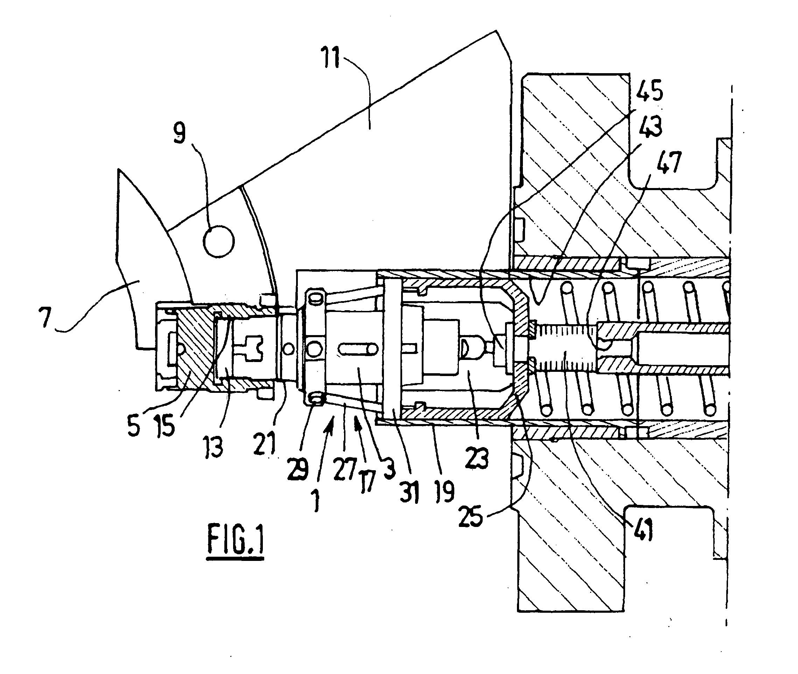

Avec référence aux figures des dessins et en particulier à la figure 1, on a décrit un connecteur électrique 1 selon l'invention adapté au domaine offshore est en particulier à une tête de puits de pétrole.

Le connecteur est de configuration cylindrique. Il comporte une fiche 3 et une embase électriques 5, montées chacune sur une partie support respective, à savoir un tube mobile cylindrique vertical 7 dit "tubing hanger" pourvu d'une partie 9 logeant l'embase et dite "tubing hanger housing", et une partie fixe complémentaire 11 logeant la fiche, dite "bonnet", permettant l'adaptation d'un robot (ROV) non représenté assurant le mouvement de la fiche 3 en vue de sa connexion ou de sa déconnexion dans l'embase.

En service, la partie tube vertical rotative 7 est destinée à être positionnée et fixée en altitude et en rotation relativement à la partie bonnet 11 fixe, de manière à permettre un alignement (très proche) de la fiche 3 et de l'embase 5 du connecteur.

Néanmoins, en raison de la complexité des pièces en jeu, de leurs grandes dimensions et du faible espace disponible, l'alignement n'est pas parfait et le connecteur risquerait d'être endommagé ou de ne pas connecter. Le connecteur, selon l'invention, dit à auto-alignement, permet de compenser le défaut d'alignement et de réaliser la connexion de la fiche 3 dans l'embase 5 avec un décalage angulaire des pièces 7, 11 d'environ ± 1,5 degrés à environ 185 mm du centre de rotation, ce qui équivaut à un désalignement radial de la fiche 3 relativement à l'embase 5 d'environ 5 mm, et avec un décalage d'altitude de celles-ci d'environ ± 1,14 mm.

La figure 1 et une vue de dessus du connecteur 1 en position connectée. On voit notamment que la partie mâle en saillie ou fiche mâle cylindrique 13 à l'extrémité de la fiche 3 est introduite coaxialement dans la partie femelle complémentaire ou partie réceptacle 15 de l'embase 5.

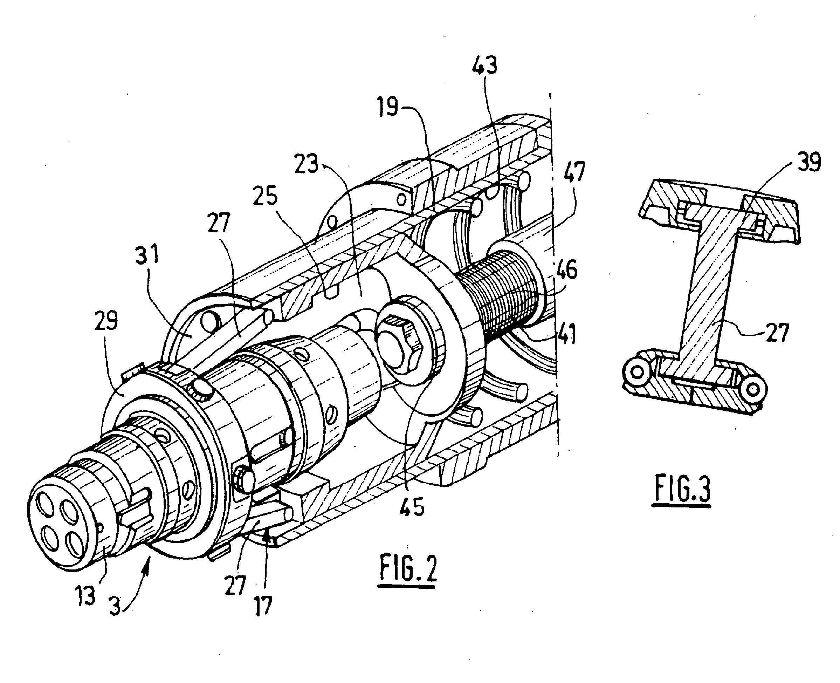

Pour permettre la réalisation de cette connexion, il est nécessaire que la fiche 3 et l'embase 5 soient parfaitement alignées coaxialement. Pour se faire, la fiche 3, élément mobile du connecteur, comporte (figure 2) un dispositif d'auto-alignement 17 et un dispositif mécanique 19 d'entraînement en connexion de la fiche 3. Pour faciliter la connexion, l'ouverture d'entrée 21 de la partie réceptacle 15 de l'embase 5 est légèrement évasée, avec un diamètre d'entrée légèrement plus grand que celui de la fiche mâle 13.

Le dispositif d'auto-alignement 17 est maintenant décrit.

La fiche 3 est montée par sa partie avant, à l'arrière de la fiche mâle 13, sur le dispositif d'auto alignement 17 et est reçue par sa partie arrière dans un espace de débattement 23 arrière, lequel est délimité par une partie carter cylindrique ou cloche 25, coaxiale à la fiche 3 hors débattement.

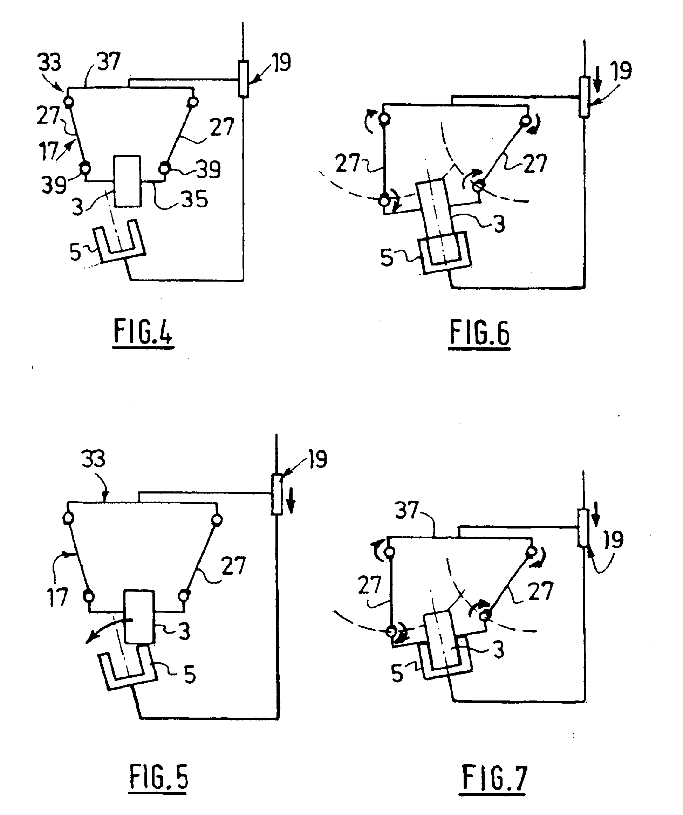

Le dispositif d'auto alignement 17 comporte essentiellement deux biellettes identiques opposées 27, lesquelles sont reliées au corps de la fiche 3 par une bague 29 avant solidaire de celui-ci et sont reliées à la partie carter 25 par une bague arrière 31 fixée à son bord périphérique. Les bagues 29, 31 sont montées à symétrie axiale (perpendiculairement à l'axe). Les biellettes 27 sont montées dans un plan longitudinal médian de la fiche 3, étant articulées sur lesdites bagues 29, 31 selon un ensemble articulé à forme de trapèze isocèle 33 (figure 4), en position moyenne (sans débattement angulaire de la fiche).

Les biellettes 27 sont inclinées 35 vers l'avant en sorte que la fiche 3 est fixée à la petite base 35 du trapèze en position centrée sur celle-ci et de même la grande base 37 du trapèze est reliée à la pièce 25 supportant la fiche, en position centrée au moyen de la bague arrière 31.

Les liaisons d'articulation des biellettes 27 sur les bagues 29, 31 sont de type pivot 39 avec jeu (figure 3), de manière à permettre de rattraper en outre l'écart d'alignement de la fiche 3 relativement à l'embase 5 en altitude et d'allonger légèrement la biellette 27 dans la déformation du trapèze 33.

Ce faisant, la fiche 3 est mobile angulairement dans le plan des biellettes 27 et également mobile légèrement à l'écart de ce plan en rattrapage d'altitude du désalignement. Le débattement de la fiche 3 est libre dans la partie carter arrière 25, laquelle est de préférence isolée électriquement.

Le dispositif mécanique 19 d'entraînement de la fiche 3 en vue de sa connexion ou déconnexion dans l'embase 5 comporte essentiellement un actionneur linéaire 41 relié à la partie carter 25, laquelle est montée coulissante dans une chambre cylindrique complémentaire 43 montée coaxialement à l'axe du connecteur et solidaire de la partie support 11 de la fiche.

L'actionneur est dans le cas présent un actionneur à vis 46 dont l'extrémité 45 est fixée à la partie médiane arrière de la partie carter 25 et dont la partie tournante ou écrou 47 en prise sur la vis est manoeuvrée en rotation par ledit robot en vue de pousser ou tirer la fiche 3.

Le fonctionnement du connecteur 1 est à présent décrit en référence aux figures 4 à 7.

On part tout d'abord de la position déconnectée du connecteur (figure 4), les parties support 7,11 de la fiche 3 et de l'embase 5 ayant été préalablement positionnées pour la connexion. La fiche 3 et l'embase 5 sont ainsi écartées l'une de l'autre et désalignées dans la limite des valeurs d'écartement angulaire et d'altitude précitées (ou autres) en fonction du connecteur.

La première étape consiste à entraîner la fiche 3 de manière à toucher l'embase 5 par l'extrémité de la fiche mâle 13. L'embase 5 étant fixe, cet entraînement déforme l'ensemble articulé 33 des biellettes 27 en tournant la fiche mâle 13 d'une part et en la déplaçant vers la gauche (à gauche sur le dessin) comme le montrent les figures 5 et 6.

Au stade de la position de la figure 6, la fiche 3 et l'embase 5 se trouvent parfaitement alignées et les écarts angulaire et d'altitude ont été rattrapés. Il ne reste plus qu'à actionner le dispositif mécanique 19 d'entraînement de la fiche pour poursuivre la connexion et pousser la fiche mâle 13 coaxialement à l'embase 5.

A la fin de la connexion (figure 7), la fiche mâle 13 vient buter dans le fond de l'embase 5 et se verrouiller en connexion dans celle-ci et le dispositif mécanique 19 d'entraînement s'arrête.

Le connecteur est à présent connecté et la connexion a été parfaitement réalisée.

La déconnexion s'effectue de manière inverse à la connexion par retrait de la fiche mâle 13 de l'embase 5 au moyen dudit dispositif mécanique 19 d'entraînement.

Naturellement et comme précité, on peut jouer sur les nombreux paramètres en jeu dans le fonctionnement du connecteur et, par exemple, la longueur des biellettes 27, la position de la fiche 3 et/ou de l'embase 5 sur la petite base 35 du trapèze (le connecteur pouvant recevoir de façon inverse à la fiche 3 l'embase 5 sur la petite base 35 du trapèze 33, ou les deux conjointement), le jeu de pivotement des biellettes 27, l'allongement télescopique des biellettes 27 etc.

L'invention s'applique également aux connecteurs optiques ou hydrauliques (et pneumatiques) dont les parties complémentaires mâle et femelle s'assemblent l'une à l'autre et nécessitent un auto-alignement de ces parties de façon similaire au connecteur électrique décrit.

Par ailleurs, l'invention pourrait encore s'appliquer à une combinaison de connecteurs (au moins deux), électriques, optiques, hydrauliques ou pneumatiques montés sur un support commun et nécessitant un auto-alignement commun de leurs parties complémentaires.

## Revendications

1. Connecteur électrique (1) ou optique ou hydraulique ou pneumatique pourvu respectivement d'une fiche électrique, optique ou hydraulique ou pneumatique destinée a être connectee dans une embase électrique, optique ou hydraulique ou pneumatique, du type a auto-alignement de la fiche (3) relativement à l'embase (5), notamment pour les connexions "offshore", la fiche (3) et l'embase (5) etant solidaires de parties respectives support (11,7) destinées à se positionner l'une relativement à l'autre en vue d'un alignement approximatif de la fiche (3) et de l'embase (5) pour la mise en connexion de ces dernières, comportant un dispositif mécanique (19) d'entraînement permettant a la fiche (3) ou à l'embase (5) d'effectuer un mouvement d'avance et de recul, en vue de sa connexion dans l'embase (5) ou la fiche (3), respectivement, et un dispositif d'auto-alignement (17) de la fiche (3) ou de l'embase (5) relativement à l'embase (5) ou a la fiche (3), respectivement, permettant de rattraper les décalages angulaire, radial et de position de l'alignement de la fiche (3) relativement à l'embase (5) à la connexion de celles-ci, **caractérisé en ce que** ledit dispositif d'auto-alignement (17) comporte au moins deux biellettes (27) montées en trapèze articulé (33) de chaque côté de la fiche (3) ou de l'embase (5), articulées d'une part à la fiche (3) ou à l'embase (5), selon une première base (35) du trapeze articule (33) et d'autre part à une pièce support (25) de la fiche (3) ou de l'embase (5), respectivement, selon une deuxième base (37) du trapèze articulé (33).

2. Connecteur (1), selon la revendication 1, **caractérisé en ce que** ledit dispositif mécanique (19) d'entraînement de la fiche (3) ou de l'embase (5) comprend au moins un actionneur linéaire (41) de la fiche (3) ou de l'embase (5) relativement à l'embase (5) ou à la fiche (3), respectivement.

3. Connecteur (1), selon la revendication 1 ou 2, **caractérisé en ce que** la dite première base (35) du trapèze articulé (33) est la petite base du trapèze articulé (33) et ladite seconde base (37) est une grande base (37) du trapèze articulé (33).

4. Connecteur (1) selon la revendication 1, 2 ou 3, **caractérisé en ce que** la longueur des biellettes (27) et le positionnement de la fiche (3) ou de l'embase (5) sur la première base (35) du trapèze articulé (33) sont tels qu'ils permettent à l'approche de l'embase (5) ou de la partie receptacle (15) par la fiche male (13) une orientation coaxiale de celles- ci.

5. Connecteur (1), selon l'une des revendications precedentes, **caractérise en ce que** le trapéze articulé (33) est isocèle et la fiche (3) ou 1 embase (5) est montée dans la partie médiane de la petite base (35)

6. Connecteur (1), selon l'une des revendications precedentes, caratérisé en ce que le trapèze articule (33) est disposé dans un plan median du connecteur, voire un plan diamétral dans le cas d une configuration cylindrique du connecteur (1)

7. Connecteur (1), selon l'une des revendications 1-5, **caractérise en ce que** le trapèze articulé (33) est monté dans un plan parallèle au plan médian, etant décalé de celui-ci

8. Connecteur (1), selon l'une des revendications precédentes, **caractérisé en ce que**, en vue de faciliter le rattrapage des jeux, en particulier le jeu de positionnement en altitude de la fiche (3) relativement a l'embase (5), la liaison d'articulation (39) des biellettes (27) est réalisée avec un jeu réalisant un allongement possible de celles- ci, par exemple au moyen du positionnement d au moins un axe de biellettes (27) dans un trou oblong de l'articulation permettant ainsi à l'axe de se déplacer

9. Connecteur (1), selon la revendication 8, **caractérise en ce que** ladite liaison d'articulation est de type pivot (39) avec jeu, pivot glissant ou a rotule à debattement angulaire lateral partiel.

10. Connecteur (1), selon l'une des revendications precedentes, **caractérise en ce que** les biellettes (27) sont télescopiques, comportant des actionneurs linéaires pour leur allongement ou raccourcissement.

11. Connecteur (1), selon l'une des revendications precedentes, **caractérisé en ce que** les biellettes (27) sont reliées à deux bagues coaxiales (29,31), hors débattement, la bague avant (29) recevant la fiche (3) ou l'embase (5) et la bague arrière (31) etant montée solidairement a la pièce support (25) de la fiche (3) ou de l'embase (5), respectivement.

12. Connecteur (1), selon l'une des revendications précédentes, **caractérisé en ce que** la fiche (3) et l'embase (5) comportent chacune un
dispositif d'auto-alignement (17) en sorte que la fiche (3) et l'embase (5) s'auto-alignent conjointement à la connexion.

13. Connecteur (1), selon l'une des revendications précédentes, **caractérisé en ce que** la fiche (3) ou l'embase (5) est montée sur le trapèze articulé (33), lequel se déforme en approche et au contact de la partie complémentaire, embase (5) ou fiche (3), respectivement, à la suite de quoi la connexion de la fiche (3) dans l'embase (5) peut être effectuée au moyen dudit dispositif mécanique (19) d'entraînement.

14. Connecteur (1), selon l'une des revendications précédentes, **caractérisé en ce que** l'embase (5) ou la fiche (3) présente une partie réceptacle (15) dont l'ouverture (21) est de dimension légèrement supérieures à l'extrémité externe de la fiche (3) ou de l'embase (5), respectivement, et/ou est formée de façon évasée vers l'extérieur, en sorte que la capture de la partie mâle de la fiche (3) ou de l'embase (5) par la partie réceptacle (15) complémentaire et son introduction de connexion soient facilitées.

15. Connecteur (1), selon l'une des revendications précédentes, **caractérisé en ce qu'**il comporte un volume de débattement (23) de la fiche (3) ou de l'embase (5) pour son positionnement en auto alignement relativement à l'embase (5) ou à la fiche (3), respectivement, ce volume pouvant être protégé pas une partie carter isolante (25).

16. Connecteur (1), selon la revendication 15, **caractérisé en ce que** ladite partie carter isolante (25) coulisse dans un logement ou chambre complémentaire (43) de la partie support (11) et agit en tant qu'actionneur linéaire de la fiche (3) ou de l'embase (5) dudit dispositif mécanique (19) d'entraînement.

17. Combinaison de connecteurs (1) tels que définis selon l'une des revendications précédentes, **caractérisée en ce qu'**elle comporte au moins deux connecteurs (1), électriques, optiques, hydrauliques ou pneumatiques montés sur un support commun avec auto-alignement de leurs parties complémentaires.

## Patentansprüche

1. Elektrischer, optischer, hydraulischer oder pneumatischer Verbinder (1) mit einem elektrischen, optischen, hydraulischen bzw. pneumatischen Stecker zum Einstecken in eine elektrische, optische, hydraulische oder pneumatische Buchse des Typs, der den Stecker (3) relativ zur Buchse (5) automatisch ausrichtet, insbesondere für "Offshore"- Verbindungen, wobei der Stecker (3) und die Buchse (5) aus einem Stück mit jeweiligen Stützabschnitten (11, 7) zum Positionieren relativ zueinander sind, so dass eine näherungsweise Ausrichtung des Steckers (3) und der Buchse (5) für deren Verbindung miteinander erzielt wird, umfassend eine mechanische Antriebsvorrichtung (19), die ein Vor- und Zurückbewegen des Steckers (3) oder der Buchse (5) für eine Verbindung mit der Buchse (5) bzw. dem Stecker (3) bewirkt, und eine Vorrichtung (17) zum Selbstausrichten des Steckers (3) oder der Buchse (5) relativ zur Buchse (5) bzw. zum Stecker (3), so dass die Winkel-, Radial- und Positionsversätze der Ausrichtung des Steckers (3) relativ zur Buchse (5) bei deren Verbindung miteinander justiert werden können, **dadurch gekennzeichnet, dass** die Selbstausrichtungsvorrichtung (17) wenigstens zwei Verbindungsstäbe (27) umfasst, die auf jeder Seite des Steckers (3) oder der Buchse (5) zu einem Gelenktrapez (33) montiert sind, angelenkt einerseits am Stecker (3) oder an der Buchse (5) entlang einer ersten Basislinie (35) des Gelenktrapezes (33) und andererseits am Stützteil (25) des Steckers (3) bzw. der Buchse (5) entlang einer zweiten Basislinie (37) des Gelenktrapezes (33).

2. Verbinder (1) nach Anspruch 1, **dadurch gekennzeichnet, dass** die mechanische Antriebsvorrichtung (19) des Steckers (3) oder der Buchse (5) wenigstens einen Linearsteller (41) für den Stecker (3) oder die Buchse (5) relativ zu der Buchse (5) bzw. zu dem Stecker (3) umfasst.

3. Verbinder (1) nach Anspruch 1 oder 2, **dadurch gekennzeichnet, dass** die erste Basislinie (35) des Gelenktrapezes (33) die kleine Basislinie des Gelenktrapezes (33) ist und die zweite Basislinie (37) eine große Basislinie (37) des Gelenktrapezes (33) ist.

4. Verbinder (1) nach Anspruch 1, 2 oder 3, **dadurch gekennzeichnet, dass** die Länge der Verbindungsstäbe (27) und die Positionierung des Steckers (3) oder der Buchse (5) an der ersten Basislinie (35) des Gelenktrapezes (33) derart sind, dass sie, wenn sich der männliche Stecker (13) der Buchse (5) oder dem Aufnahmeteil (15) nähert, koaxial orientiert werden können.

5. Verbinder (1) nach einem der vorherigen Ansprüche, **dadurch gekennzeichnet, dass** das Gelenktrapez (33) gleichschenklig ist und der Stecker (3) oder die Buchse (5) im mittleren Teil der kleinen Basislinie (35) montiert ist.

6. Verbinder (1) nach einem der vorherigen Ansprüche, **dadurch gekennzeichnet, dass** das Gelenktrapez (33) in einer Mittelebene des Verbinders, sogar in einer Diametralebene bei einer zylindrischen Konfiguration des Verbinders (1) angeordnet ist.

7. Verbinder (1) nach einem der Ansprüche 1 bis 5, **dadurch gekennzeichnet, dass** das Gelenktrapez (33) in einer Ebene parallel zur Mittelebene von dieser versetzt montiert ist.

8. Verbinder (1) nach einem der vorherigen Ansprüche, **dadurch gekennzeichnet, dass** zum Erleichtern des Justierens von Spiel, insbesondere des Höhenpositionierungsspiels des Steckers (3) relativ zur Buchse (5), die Gelenkverbindung (39) der Verbindungsstäbe (27) mit einem Spiel versehen ist, so dass die Verbindungsstäbe ausfahren können, z.B. durch Positionieren wenigstens einer Verbindungsstabachse (27) in einem Langloch des Gelenks, so dass sich die Achse verschieben kann.

9. Verbinder (1) nach Anspruch 8, **dadurch gekennzeichnet, dass** die Gelenkverbindung vom Typ Drehgelenk (39) mit Spiel, Gleitgelenk oder Kugelgelenk mit teilweisem lateralem Winkelfreiraum ist.

10. Verbinder (1) nach einem der vorherigen Ansprüche, **dadurch gekennzeichnet, dass** die Verbindungsstäbe (27) teleskopisch sind und Linearsteller zum Ein- oder Ausfahren haben.

11. Verbinder (1) nach einem der vorherigen Ansprüche, **dadurch gekennzeichnet, dass** die Verbindungsstäbe (27) mit zwei koaxialen Ringen (29, 31) ohne Freiraum verbunden sind, wobei der vordere Ring (29) den Stecker (3) oder die Buchse (5) aufnimmt und der hintere Ring (31) einstückig mit dem Stützteil (25) des Steckers (3) bzw. der Buchse (5) montiert ist.

12. Verbinder (1) nach einem der vorherigen Ansprüche, **dadurch gekennzeichnet, dass** der Stecker (3) oder die Buchse (5) jeweils eine Selbstausrichtungsvorrichtung (17) aufweisen, so dass sich der Stecker (3) und die Buchse (5) beim Verbinden selbst aufeinander ausrichten.

13. Verbinder (1) nach einem der vorherigen Ansprüche, **dadurch gekennzeichnet, dass** der Stecker (3) oder die Buchse (5) an dem Gelenktrapez (33) montiert ist, das sich bei Annäherung und Kontakt mit dem komplementären Teil, der Buchse (5) bzw. dem Stecker (3), verformt, wonach der Stecker (3) mittels der mechanischen Antriebsvorrichtung (19) in die Buchse (5) eingesteckt werden kann.

14. Verbinder (1) nach einem der vorherigen Ansprüche, **dadurch gekennzeichnet, dass** der Stecker (3) oder die Buchse (5) einen Aufnahmeteil (15) aufweist, dessen Öffnung (21) geringfügig größer ist als das äußere Ende des Steckers (3) bzw. der Buchse (5), und/oder so ausgebildet ist, dass sie nach außen aufgeweitet ist, so dass die Erfassung des männlichen Teils des Steckers (3) oder der Buchse (5) mit dem komplementären Aufnahmeteil (15) und seine Verbindungseinfiihrung erleichtert werden.

15. Verbinder (1) nach einem der vorherigen Ansprüche, **dadurch gekennzeichnet, dass** er ein Freiraumvolumen (23) des Steckers (3) oder der Buchse (5) für eine selbstausrichtende Positionierung relativ zu dem Stecker (3) bzw. der Buchse (5) umfasst, wobei dieses Volumen durch ein isolierendes Gehäuseteil (25) geschützt werden kann.

16. Verbinder (1) nach Anspruch 15, **dadurch gekennzeichnet, dass** der isolierende Gehäuseteil (25) in einer komplementären Aufnahme oder Kammer (43) des Stützabschnittes (11) gleitet und als Linearsteller für den Stecker (3) oder die Buchse (5) der mechanischen Antriebsvorrichtung (19) dient.

17. Kombination von Verbindern (1) gemäß Definition in einem der vorherigen Ansprüche, **dadurch gekennzeichnet, dass** sie wenigstens zwei elektrische, optische, hydraulische oder pneumatische Verbinder (1) umfasst, die an einem gemeinsamen Träger mit Selbstausrichtung ihrer komplementären Teile montiert sind.

## Claims

1. An electrical, optical, hydraulic or pneumatic connector (1) provided with an electrical, optical, hydraulic or pneumatic plug, respectively, designed to be connected to an electrical, optical, hydraulic or pneumatic socket of the type that self-aligns the plug (3) relative to the socket (5), particularly for "offshore" connections, said plug (3) and said socket (5) being integral with respective support parts (11, 7) designed to be positioned relative to one another so as to obtain approximate alignment of said plug (3) and said socket (5) in order to connect them together, comprising a mechanical drive device (19) allowing said plug (3) or said socket (5) to move forward and backward so as to be connected to said socket (5) or to said plug (3), respectively, and a device (17) for self-aligning said plug (3) or said socket (5) relative to said socket (5) or to said plug (3), respectively, allowing the angular, radial, and alignment position offsets of said plug (3) relative to said socket (5) to be adjusted when said plug (3) and said socket (5) are connected together, **characterised in that** said self-alignment device (17) comprises at least two connecting rods (27) mounted as an articulated trapezium (33), on each side of said plug (3) or of said socket (5), articulated on the one hand to said plug (3) or to said socket (5) along a first baseline (35) of said articulated trapezium (33) and on the other hand to a support element (25) of said plug (3) or of said socket (5), respectively, along a second baseline (37) of said articulated trapezium (33).

2. The connector (1) according to claim 1, **characterised in that** said mechanical drive device (19) of said plug (3) or of said socket (5) comprises at least one linear actuator (41) for said plug (3) or said socket (5) relative to said socket (5) or to said plug (3), respectively.

3. The connector (1) according to claim 1 or 2, **characterised in that** said first baseline (35) of said articulated trapezium (33) is the small baseline of said articulated trapezium (33) and said second baseline (37) is a large baseline (37) of said articulated trapezium (33).

4. The connector (1) according to claim 1, 2 or 3, **characterised in that** the length of said connecting rods (27) and the positioning of said plug (3) or of said socket (5) on said first baseline (35) of said articulated trapezium (33) are such that when the male plug (13) approaches said socket (5) or the receptacle part (15) they allow them to be coaxially oriented.

5. The connector (1) according to any one of the preceding claims, **characterised in that** said articulated trapezium (33) is isosceles and said plug (3) or said socket (5) is mounted in the mid-part of said small baseline (35).

6. The connector (1) according to any one of the preceding claims, **characterised in that** said articulated trapezium (33) is disposed in a mid-plane of said connector or in a diametric plane when said connector (1) is in a cylindrical configuration.

7. The connector (1) according to any one of claims 1 to 5, **characterised in that** said articulated trapezium (33) is mounted in a plane parallel to the mid-plane, being offset from said mid-plane.

8. The connector (1) according to any one of the preceding claims, **characterised in that**, in order to facilitate the adjustment of the play, in particular the height positioning play of said plug (3) relative to said socket (5), the articulated connection (39) of said connecting rods (27) is provided with play so as to allow said connecting rods to extend, for example, by positioning at least one connecting rod (27) axis in an oblong hole of the joint, thus allowing the axis to move.

9. The connector (1) according to claim 8, **characterised in that** said articulated connection is of the pivot (39) with clearance, sliding pivot or ball joint with partial lateral angular clearance type.

10. The connector (1) according to any one of the preceding claims, **characterised in that** said connecting rods (27) are telescopic, comprising linear actuators for their extension or retraction.

11. The connector (1) according to any one of the preceding claims, **characterised in that** said connecting rods (27) are connected to two coaxial rings (29, 31), free of clearance, the front ring (29) receiving said plug (3) or said socket (5) and the rear ring (31) being mounted integral with the support element (25) of said plug (3) or said socket (5), respectively.

12. The connector (1) according to any one of the preceding claims, **characterised in that** said plug (3) or said socket (5) each comprise a self-alignment device (17) such that said plug (3) and said socket (5) align themselves during the connection.

13. The connector (1) according to any one of the preceding claims, **characterised in that** said plug (3) or said socket (5) is mounted on said articulated trapezium (33), which deforms as it approaches and makes contact with the additional part, socket (5) or plug (3), respectively, after which said plug (3) can be connected into said socket (5) by means of said mechanical drive device (19).

14. The connector (1) according to any one of the preceding claims, **characterised in that** said plug (3) or said socket (5) has a receptacle part (15) having an opening (21) that is designed to be slightly larger than the external end of said plug (3) or said socket (5), respectively, and/or is formed so as to be flared outwards, so that the capture of the male part of said plug (3) or of said socket (5) by said additional receptacle part (15) and its introduction for connection are facilitated.

15. The connector (1) according to any one of the preceding claims, **characterised in that** it comprises a clearance volume (23) for said plug (3) or said socket (5) so that it is positioned by self-alignment relative to said plug (3) or said socket (5), respectively, said volume being able to be protected by an insulating housing part (25).

16. The connector (1) according to claim 15, **characterised in that** said insulating housing part (25) slides inside an additional housing or chamber (43) of said support part (11) and acts as a linear actuator for said plug (3) or said socket (5) of said mechanical drive device (19).

17. A combination of connectors (1) as defined according to any one of the preceding claims, **characterised in that** it comprises at least two electrical, optical, hydraulic or pneumatic connectors (1) mounted on a common support, with self-alignment of their complementary parts.
